# EUROPEAN PATENT APPLICATION

(11) **EP 4 576 921 A1**
(43) Date of publication of application: **25.06.2025**
(21) Application number: 22955239.3
(22) Date of filing: 15.08.2022
(51) Int. Cl.: H04W 76/11, H04W 8/22

(54) **REGISTRATION METHOD, COMMUNICATION APPARATUS AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2022/112608
(87) International publication number: WO 2024/036457

(57) **Abstract**

The present disclosure relates to a registration method, a communication apparatus and a storage medium. The registration method comprises: sending, to a trusted wireless local area network access network device, a first identifier of a terminal, a registration type, and an identifier of a non-public network to be registered by the terminal. According to the present disclosure, a terminal that does not support non-access stratum signaling of a 5G core network when performing accessing by means of a wireless local area network can send, to a TWAN, a first identifier of the terminal, a registration type, and an identifier of a non-public network to be registered thereby to register with the non-public network by means of the TWAN.

## Description

### TECHNICAL FIELD

The disclosure relates to the field of communication technology, and in particular to a registration method, a communication apparatus and a storage medium.

### BACKGROUND

Currently, a terminal generally accesses a non-public network over a 3rd generation partnership project (3GPP) access network, such as a base station. However, in some cases, the terminal needs to access over another access network rather than the base station for some reasons.

### SUMMARY

In view of this, the embodiments of the disclosure propose a registration method, a communication apparatus, and a computer-readable storage medium, to solve the technical problems in the related art.

According to a first aspect of embodiments of the disclosure, a registration method is proposed. The method is performed by a terminal, which does not support a 5G core network non-access stratum (5GC NAS) signaling over wireless local area network (WLAN) access. The method includes: sending a first identifier of the terminal, a registration type and an identifier of a non-public network (NPN) that the terminal needs to register to a trusted WLAN access network (TWAN).

According to a second aspect of embodiments of the disclosure, a registration method is proposed. The method is performed by a TWAN, and includes: receiving, from a terminal, a first identifier of the terminal, a registration type and an identifier of a NPN that the terminal needs to register, in which the terminal is a terminal that does not support a 5GC NAS signaling over WLAN access; and sending a registration request to an access and mobility management function (AMF), in which the registration request includes the first identifier and the registration type.

According to a third aspect of embodiments of the disclosure, a registration method is proposed. The method is performed by an AMF, and includes: receiving a registration request sent by a TWAN, in which the registration request includes a first identifier of a terminal, a registration type and an identifier of a NPN that the terminal needs to register, and the terminal is a terminal that does not support a 5GC NAS signaling over WLAN access.

According to a fourth aspect of embodiments of the disclosure, a terminal is proposed. The terminal includes: a sending module, configured to send a first identifier of the terminal, a registration type and an identifier of a NPN that the terminal needs to register to a TWAN, in which the terminal is a terminal that does not support a 5GC NAS signaling over WLAN access.

According to a fifth aspect of embodiments of the disclosure, a TWAN is proposed. The device includes: a receiving module, configured to receive, from a terminal, a first identifier of the terminal, a registration type and an identifier of a NPN that the terminal needs to register, in which the terminal is a terminal that does not support a 5GC NAS signaling over WLAN access; and a sending module, configured to send a registration request to an AMF, in which the registration request includes the first identifier and the registration type.

According to a sixth aspect of embodiments of the disclosure, an AMF is proposed. The AMF includes: a receiving module, configured to receive a registration request sent by a TWAN, in which the registration request includes a first identifier of a terminal, a registration type and an identifier of a NPN that the terminal needs to register, and the terminal is a terminal that does not support a 5GC NAS signaling over WLAN access.

According to a seventh aspect of embodiments of the disclosure, a communication apparatus is proposed. The communication apparatus includes: a processor and a memory for storing computer programs. When the computer programs are executed by the processor, the registration method performed by the terminal is implemented.

According to an eighth aspect of embodiments of the disclosure, a communication apparatus is proposed. The communication apparatus includes: a processor and a memory for storing computer programs. When the computer programs are executed by the processor, the registration method performed by the TWAN is implemented.

According to a ninth aspect of embodiments of the disclosure, a communication apparatus is proposed. The communication apparatus includes: a processor and a memory for storing computer programs. When the computer programs are executed by the processor, the registration method performed by the AMF is implemented.

According to a tenth aspect of embodiments of the disclosure, a computer-readable storage medium for storing computer programs is proposed. When the computer programs are executed by a processor, the registration method performed by the terminal is implemented.

According to an eleventh aspect of embodiments of the disclosure, a computer-readable storage medium for storing computer programs is proposed. When the computer programs are executed by a processor, the registration method performed by the TWAN is implemented.

According to a twelfth aspect of embodiments of the disclosure, a computer-readable storage medium for storing computer programs is proposed. When the computer programs are executed by a processor, the registration method performed by the AMF is implemented.

According to the embodiments of the disclosure, the terminal that does not support a 5GC NAS signaling over WLAN access may register to the NPN through the TWAN by sending the first identifier of the terminal, the registration type, and the identifier of the NPN that needs to be registered.

### BRIEF DESCRIPTION OF THE DRAWINGS

In order to more clearly illustrate the technical solutions in embodiments of the disclosure, the drawings required for use in the description of the embodiments will be briefly introduced below. Obviously, the drawings described below are only some embodiments of the disclosure. For those skilled in the art, other drawings may be obtained based on these drawings without inventive work.
FIG. 1 is a flowchart of a registration method according to an embodiment of the disclosure.
FIG. 2 is a flowchart of a registration method according to an embodiment of the disclosure.
FIG. 3 is a flowchart of a registration method according to an embodiment of the disclosure.
FIG. 4 is a flowchart of a registration method according to another embodiment of the disclosure.
FIG. 5 is a schematic diagram of inter-device interaction according to an embodiment of the disclosure.
FIG. 6 is a block diagram of a terminal according to an embodiment of the disclosure.
FIG. 7 is a block diagram of a trusted wireless local area network (WLAN) access network (TWAN) according to an embodiment of the disclosure.
FIG. 8 is a block diagram of an access and mobility management function (AMF) according to an embodiment of the disclosure.
FIG. 9 is a block diagram of an apparatus for registration according to an embodiment of the disclosure.

### DETAILED DESCRIPTION

The technical solutions in the embodiments of the disclosure will be clearly and completely described below in combination with the drawings in the embodiments of the disclosure. Obviously, the described embodiments are only part of the embodiments of the disclosure, rather than all the embodiments. Based on the embodiments in the disclosure, all other embodiments obtained by those skilled in the art without inventive work shall fall within the scope of protection of the disclosure.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

For the purposes of brevity and ease of understanding, the terms "greater than" or "less than", "higher than" or "lower than" are used herein to represent size relationships. Those skilled in the art understand that the term "greater than" also covers the meaning of "greater than or equal to" and the term "less than" also covers the meaning of "less than or equal to", and the term "higher than" also covers the meaning of "higher than or equal to", and the term "lower than" also covers the meaning of "lower than or equal to".

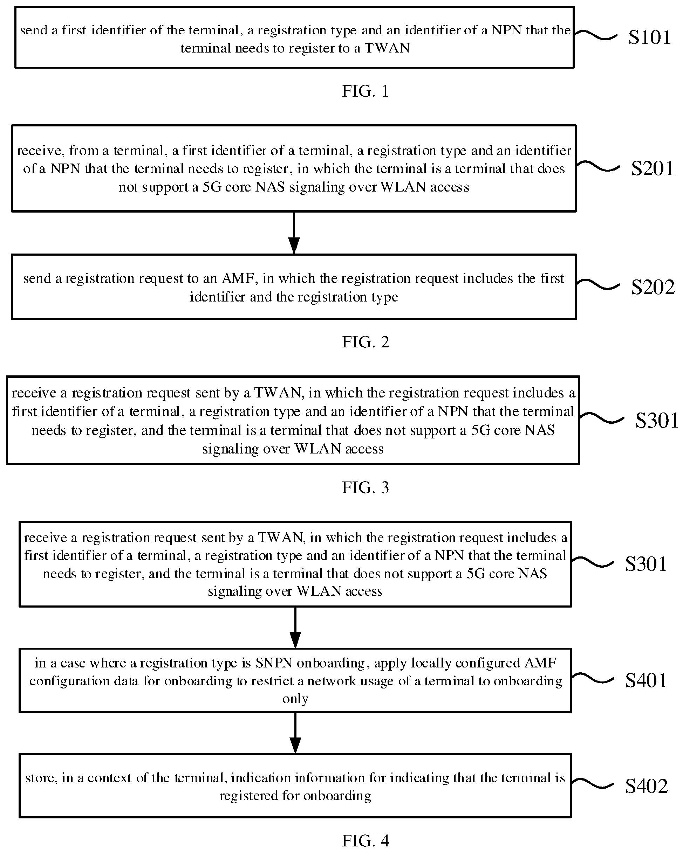

FIG. 1 is a flowchart of a registration method according to an embodiment of the disclosure. The registration method shown in this embodiment may be performed by a terminal, in which the terminal is a terminal does not support a 5G core network non-access stratum (5GC NAS) signaling over wireless local area network (WLAN) access.

As illustrated in FIG. 1, the registration method includes the following steps.

At step S101, a first identifier of the terminal, a registration type and an identifier of a non-public network (NPN) that the terminal needs to register are sent to a trusted WLAN access network (TWAN) device.

The NPN may be a stand-alone NPN (SNPN).

In all embodiments of the disclosure, the TWAN may include a trusted WLAN access point (TWAP) and a trusted WLAN interworking function (TWIF).

When the terminal sends information to the TWAN, the terminal may send the information to the TWAP first, through which the information is transferred to the TWIF. The TWIF may further communicate with an access and mobility management function (AMF), for example, sending the information from the terminal to the AMF. Correspondingly, when the AMF sends information to the TWAN, the AMF may send the information to the TWIF first, through which the information is transferred to the TWAP, so that the TWAP may further communicate with the terminal, for example, sending the information from the AMF to the terminal.

The AMF and an authentication service function (AUSF) in the following embodiments may be a core network device in the NPN.

In an embodiment, the terminal is a terminal that does not support the 5GC NAS signaling during the access over the WLAN access, which may be called a non-5G-capable over WLAN (N5CW). When accessing over the WLAN, the terminal does not support communication through the NAS signaling.

When the terminal needs to register to the NPN, the terminal may send its own first identifier, the registration type and the identifier of the NPN that needs to be registered to the TWAN. In detail, the terminal may first send the above information to the TWAP, through which the information may be transferred to the TWIF. The identifier of the NPN includes a public land mobile network (PLMN) identifier and a network identifier (NID).

The TWAN may select a core network device in the NPN, such as the AMF, according to the identifier of the NPN that the terminal needs to register, and send a registration request to the AMF, in which the registration request carries the first identifier of the terminal, the registration type and the identifier of the NPN that needs to be registered.

After receiving the registration request, the AMF may determine that the terminal needs to be registered, and then perform an authentication process on the terminal. The authenticated terminal may complete the registration. The specific authentication method is not limited in this disclosure, and may be selected as needed.

According to the embodiments of the disclosure, the terminal that does not support the 5GC NAS signaling over the WLAN access may register to the NPN through the TWAN by sending the first identifier of the terminal, the registration type, and the identifier of the NPN that needs to be registered to the TWAN.

In an embodiment, the registration type includes at least one of:
SNPN onboarding;
initial registration; or
mobility registration update.

In an embodiment, the first identifier includes at least one of:
a subscription permanent identifier (SUPI);
a subscription concealed identifier (SUCI);
an onboarding SUPI; or
an onboarding SUCI.

In an embodiment, in a case where the registration type is the SNPN onboarding, the first identifier includes the onboarding SUPI and/or the onboarding SUCI.

That is, in a case where the terminal needs to perform an SNPN onboarding registration, the first identifier sent to the TWAN may be the onboarding SUPI or the onboarding SUCI, so that the first identifier in the registration request sent by the TWAN to the AMF may be the onboarding SUPI or the onboarding SUCI. In this case, the registration request sent by the TWAN to the AMF may not carry the registration type, and the AMF may determine that the registration type is the SNPN onboarding according to the first identifier, which is beneficial to saving communication resources.

In an embodiment, in a case where an identifier of a network that needs to be registered is the identifier of the NPN, and an authentication algorithm for the terminal supports a privacy protection mechanism of the SUPI, the first identifier includes an anonymous identifier.

The authentication algorithm includes but is not limited to an extensible authentication protocol (EAP). The anonymous identifier may be obtained by ignoring a user name part in the SUCI or the onboarding SUCI of the terminal, or by uniformly setting the user name in the SUCI or the onboarding SUCI of the terminal to be anonymous.

In a case where the terminal needs to register to the NPN, the terminal may have privacy needs, for example, the terminal does not want its user name to be revealed. Therefore, when the authentication algorithm for the terminal supports the privacy protection mechanism of the SUPI, the first identifier sent by the terminal to the TWAN may be the anonymous identifier, so that the first identifier of the terminal in the registration request sent by the TWAN to the AMF is the anonymous identifier. Therefore, the first identifier sent by the terminal may not carry the user name of the terminal, so that the privacy needs of the terminal may be satisfied.

In an embodiment, the terminal supports a key-generating EAP. The EAP includes but is not limited to EAP-transport layer security (EAP-TLS) and EAP-tunnel transport layer security (EAP-TTLS).

In a case where the terminal supports the key-generating EAP, even if the first identifier sent by the terminal to the TWAN is the anonymous identifier, the authentication of the terminal may be successfully completed based on the anonymous identifier, without having to send the authenticated identifier to the TWAN.

FIG. 2 is a flowchart of a registration method according to an embodiment of the disclosure. The registration method shown in this embodiment may be executed by a TWAN, which may include a TWAP and a TWIF, and the TWAN may communicate with a terminal or an AMF in a NPN.

As illustrated in FIG. 2, the registration method includes the following steps.

At step S201, a first identifier of a terminal, a registration type and an identifier of a NPN that the terminal needs to register which are sent by the terminal are received, in which the terminal is a terminal that does not support a 5GC NAS signaling over WLAN access.

At step S202, a registration request is sent to an AMF, in which the registration request includes the first identifier and the registration type.

In an embodiment, the terminal is a terminal that does not support the 5GC NAS signaling over the WLAN access, which may be called a N5CW. When the terminal accesses over the WLAN, the terminal does not support communication through the NAS signaling.

When the terminal needs to register to the NPN, the terminal may send its own first identifier, the registration type and the identifier of the NPN that needs to be registered to the TWAN. In detail, the terminal may first send the above information to the TWAP, through which the information may be transferred to the TWIF. The identifier of the NPN includes a PLMN identifier and a NID.

The TWAN may select a core network device in the NPN, such as the AMF, according to the identifier of the NPN that the terminal needs to register, and send a registration request to the AMF, in which the registration request carries the first identifier of the terminal, the registration type and the identifier of the NPN that needs to be registered.

After receiving the registration request, the AMF may determine that the terminal needs to be registered, and then performs an authentication process on the terminal. The authenticated terminal may complete the registration. The specific authentication method is not limited in this disclosure, and may be selected as needed.

According to the embodiments of the disclosure, the TWAN may receive the first identifier of the terminal, the registration type and the identifier of the NPN that needs to be registered from the terminal that does not support the 5GC NAS signaling over the WLAN access, so that it is determines that the terminal needs to register on the NPN, and then the registration request that carries the first identifier, the registration type and the identifier of the NPN that needs to be registered may be sent to the AMF, so that the terminal may register to the NPN through the TWAN.

In an embodiment, the registration type includes at least one of: SNPN onboarding; initial registration; or mobility registration update.

In an embodiment, the first identifier includes at least one of: an SUPI; an SUCI; an onboarding SUPI; or an onboarding SUCI.

In an embodiment, in a case where the registration type is the SNPN onboarding, the first identifier includes the onboarding SUPI and/or the onboarding SUCI.

In a case where the terminal needs to perform an SNPN onboarding registration, the first identifier received by the TWAN from the terminal may be the onboarding SUPI or the onboarding SUCI, so that the first identifier in a registration request sent by the TWAN to the AMF may be the onboarding SUPI or the onboarding SUCI. In this case, the registration request sent by the TWAN to the AMF may not carry the registration type, and the AMF may determine that the registration type is the SNPN onboarding according to the first identifier, which is beneficial to saving communication resources.

In an embodiment, in a case where an identifier of a network that needs to be registered is the identifier of the NPN, and an authentication algorithm for the terminal supports a privacy protection mechanism of the SUPI, the first identifier includes an anonymous identifier.

The authentication algorithm includes but is not limited to an EAP. The anonymous identifier may be obtained by ignoring a user name part in the SUCI or the onboarding SUCI of the terminal, or by uniformly setting the user name in the SUCI or the onboarding SUCI of the terminal to be anonymous.

In a case where the terminal needs to register to the NPN, the terminal may have privacy needs, for example, the terminal does not want its user name to be revealed. Therefore, when the authentication algorithm for the terminal supports the privacy protection mechanism of the SUPI, the first identifier received by the TWAN from the terminal may be the anonymous identifier, so that the first identifier of the terminal in the registration request sent by the TWAN to the AMF is the anonymous identifier. Therefore, the first identifier sent by the terminal may not carry the user name of the terminal, so that the privacy needs of the terminal may be satisfied.

FIG. 3 is a flowchart of a registration method according to an embodiment of the disclosure. The registration method shown in this embodiment may be executed by an AMF. The AMF may communicate with a TWAN and an AUSF.

As illustrated in FIG. 3, the registration method includes the following steps.

At step S301, a registration request sent by a TWAN is received, in which the registration request includes a first identifier of a terminal, a registration type and an identifier of a NPN that the terminal needs to register, and the terminal is a terminal that does not support a 5GC NAS signaling over WLAN access.

In an embodiment, the terminal is a terminal that does not support the 5GC NAS signaling over the WLAN access, which may be called a N5CW. When the terminal accesses over the WLAN, the terminal does not support communication through the NAS signaling.

When the terminal needs to register to the NPN, the terminal may send its own first identifier, the registration type and the identifier of the NPN that needs to be registered to the TWAN. In detail, the terminal may first send the above information to the TWAP, through which the information may be transferred to the TWIF. The identifier of the NPN includes a PLMN identifier and a NID.

The TWAN may select a core network device in the NPN, such as the AMF, according to the identifier of the NPN that the terminal needs to register, and send a registration request to the AMF, in which the registration request carries the first identifier of the terminal, the registration type and the identifier of the NPN that needs to be registered.

After receiving the registration request, the AMF may determine that the terminal needs to be registered, and then performs an authentication process on the terminal. The authenticated terminal may complete the registration. The specific authentication method is not limited in this disclosure, and may be selected as needed.

According to an embodiment of the disclosure, after receiving the first identifier of the terminal, the registration type and the identifier of the NPN that needs to be registered from the terminal, the TWAN may generate a registration request and send the registration request to the AMF, the AMF may register the terminal based on the first identifier, the registration type and the identifier of the NPN that needs to be registered in the registration request, so that the terminal may be registered to the NPN through the TWAN.

In an embodiment, the registration type includes at least one of: SNPN onboarding; initial registration; or mobility registration update.

In an embodiment, the first identifier includes at least one of: an SUPI; an SUCI; an onboarding SUPI; or an onboarding SUCI.

In an embodiment, in a case where the registration type is the SNPN onboarding, the first identifier includes the onboarding SUPI and/or the onboarding SUCI.

In a case where the terminal needs to perform an SNPN onboarding registration, the first identifier received by the AMF from the registration request may be the onboarding SUPI or the onboarding SUCI. In this case, the registration request sent by the TWAN to the AMF may not carry the registration type, and the AMF may determine that the registration type is the SNPN onboarding according to the first identifier, which is beneficial to saving communication resources.

In an embodiment, in a case where an identifier of a network that needs to be registered is the identifier of the NPN, and an authentication algorithm for the terminal supports a privacy protection mechanism of the SUPI, the first identifier includes an anonymous identifier.

The authentication algorithm includes but is not limited to an EAP. The anonymous identifier may be obtained by ignoring a user name part in the SUCI or the onboarding SUCI of the terminal, or by uniformly setting the user name in the SUCI or the onboarding SUCI of the terminal to be anonymous.

In a case where the terminal needs to register to the NPN, the terminal may have privacy needs, for example, the terminal does not want its user name to be revealed. Therefore, when the authentication algorithm for the terminal supports the privacy protection mechanism of the SUPI, the first identifier obtained by the AMF from the registration request may be the anonymous identifier, so that the AMF may send the anonymous identifier to the AUSF for authentication of the terminal. Therefore, the first identifier sent by the terminal may not carry the user name of the terminal, so that the privacy needs of the terminal may be satisfied.

In an embodiment, the method further includes: in a case where the registration type is the SNPN onboarding, determining that the terminal needs to perform onboarding registration.

FIG. 4 is a flowchart of a registration method according to an embodiment of the disclosure. As illustrated in FIG. 4, the method includes the following steps.

At step S401, in a case where a registration type is SNPN onboarding, locally configured AMF configuration data for onboarding is applied to restrict a network usage of a terminal to onboarding only.

At step S402, indication information for indicating that the terminal is registered for onboarding is stored in a context of the terminal.

In an embodiment, in a case of determining that the registration type in the registration request is the SNPN onboarding, the AMF may apply the locally configured AMF configuration data for onboarding to restrict the network usage of the terminal to onboarding only, and store, in the context of the terminal, the indication information for indicating that the terminal is registered for onboarding, which prevent the terminal from being abused for other purposes on the basis of satisfying the registration type required by the terminal.

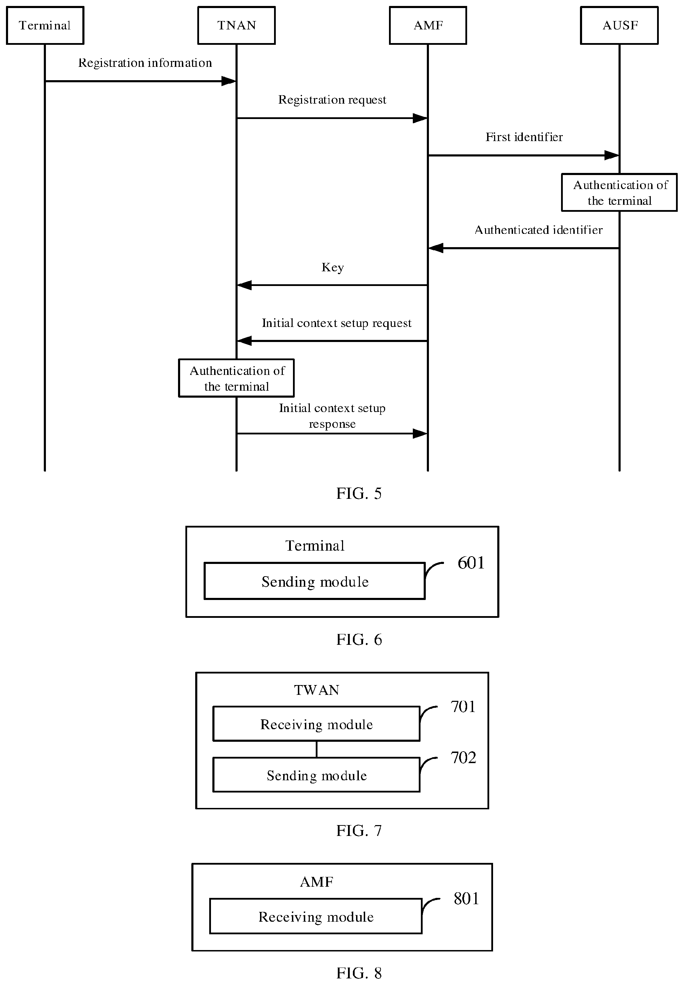

FIG. 5 is a schematic diagram of inter-device interaction according to an embodiment of the disclosure.

As illustrated in FIG. 5, the terminal is a terminal (i.e., N5CW) that does not support 5GC NAS signaling over WLAN access. In the process of registering to a NPN through a TWAN, the terminal may communicate with core network devices in the NPN, such as AMF and AUSF, through the TWAN.

When the terminal needs to register to the NPN, the terminal may send registration information (such as a first identifier of the terminal, a registration type and an identifier of the NPN that needs to be registered) to the TWAN. In detail, the terminal may send the information to the TWAP first, through which the information may be transferred to the TWIF.

The TWAN may determine, according to the received registration information, that the terminal needs to be registered, and select the AMF according to the identifier of the NPN that needs to be registered, and then send the registration request to the AMF, in which the registration request includes the first identifier of the terminal, the registration type and the identifier of the NPN that needs to be registered.

After receiving the registration request, the AMF sends the first identifier in the registration request to the AUSF, so that the AUSF may authenticate the terminal based on the first identifier.

The AMF may generate, based on related parameters of the authenticated identifier, a key (kTWAN) for the TWAN to authenticate the terminal, and send the key to the TWAN. For example, the AMF may generate a key (kAMF) at least according to the authenticated SUPI, and derive the kTWAN at least based on the kAMF, and then send the kTWANto the TWAN to authenticate the terminal.

The AMF may then send an initial context setup request to the TWAN, and the TWAN may authenticate the terminal after receiving the initial context setup request. After complete the authentication, the TWAN may send an initial context setup response to the AMF.

The embodiments of the disclosure also propose a registration system, which includes a terminal, a TWAN and an AMF. The terminal is configured to perform the registration method executed by the terminal described in any of the above embodiments, the TWAN is configured to perform the registration method executed by the TWAN described in any of the above embodiments, and the AMF is configured to perform the registration method executed by the AMF described in any of the above embodiments.

Corresponding to the aforementioned registration method and embodiments of the registration method, the disclosure also provides a registration apparatus and embodiments of the registration apparatus.

FIG. 6 is a block diagram of a registration apparatus according to an embodiment of the disclosure. The registration apparatus shown in this embodiment may be a terminal or apparatus composed of modules in the terminal. The terminal is a terminal that does not support 5GC NAS signaling over WLAN access.

As illustrated in FIG. 6, the registration apparatus includes:
a sending module 601, configured to send a first identifier of the terminal, a registration type and an identifier of a NPN that the terminal needs to register to a TWAN, in which the terminal is a terminal that does not support 5GC NAS signaling over WLAN access.

In an embodiment, the registration type includes at least one of: SNPN onboarding; initial registration; or mobility registration update.

In an embodiment, the first identifier includes at least one of: an SUPI; an SUCI; an onboarding SUPI; or an onboarding SUCI.

In an embodiment, in a case where the registration type is the SNPN onboarding, the first identifier comprises the onboarding SUPI and/or the onboarding SUCI.

In an embodiment, in a case where an identifier of a network that the terminal needs to register is the identifier of the NPN, and an authentication algorithm for the terminal supports a privacy protection mechanism of the SUPI, the first identifier includes an anonymous identifier.

In an embodiment, the terminal supports a key-generating EAP.

FIG. 7 is a block diagram of a registration apparatus according to an embodiment of the disclosure. The registration apparatus shown in this embodiment may be a TWAN or an apparatus composed of modules in the TWAN. The TWAN may include two portions, namely, a TWAP and a TWIF. The TWAN may communicate with a terminal or an AMF in the NPN.

As illustrated in FIG. 7, the registration apparatus includes:
a receiving module 701, configured to receive, from a terminal, a first identifier of the terminal, a registration type and an identifier of a NPN that the terminal needs to register, in which the terminal is a terminal that does not support a 5GC NAS signaling over WLAN access; and
a sending module 702, configured to send a registration request to an AMF, in which the registration request includes the first identifier and the registration type.
In an embodiment, the registration type includes at least one of: SNPN onboarding; initial registration; or mobility registration update.

In an embodiment, the first identifier includes at least one of: an SUPI; an SUCI; an onboarding SUPI; or an onboarding SUCI.

In an embodiment, in a case where the registration type is the SNPN onboarding, the first identifier comprises the onboarding SUPI and/or the onboarding SUCI.

In an embodiment, in a case where an identifier of a network that the terminal needs to register is the identifier of the NPN, and an authentication algorithm for the terminal supports a privacy protection mechanism of the SUPI, the first identifier includes an anonymous identifier.

FIG. 8 is a block diagram of a registration apparatus according to an embodiment of the disclosure. The registration apparatus shown in this embodiment may be an AMF or an apparatus composed of modules in the AMF. The AMF may communicate with a TWAN or an AUSF.

As illustrated in FIG. 8, the registration apparatus includes:
a receiving module 801, configured to receive a registration request sent by a TWAN, in which the registration request includes a first identifier of a terminal, a registration type and an identifier of a NPN that the terminal needs to register, and the terminal is a terminal that does not support a 5GC NAS signaling over WLAN access.

In an embodiment, the registration type includes at least one of: SNPN onboarding; initial registration; or mobility registration update.

In an embodiment, the first identifier includes at least one of: an SUPI; an SUCI; an onboarding SUPI; or an onboarding SUCI.

In an embodiment, the apparatus further includes: a processing module, configured to, in a case where the registration type is the SNPN onboarding, determine that the terminal needs to perform onboarding registration.

In an embodiment, the processing module is further configured to: in a case where the registration type is the SNPN onboarding, apply locally configured AMF configuration data for onboarding to restrict a network usage of the terminal to onboarding only; and store, in a context of the terminal, indication information for indicating that the terminal is registered for onboarding.

In an embodiment, in a case where the registration type is the SNPN onboarding, the first identifier comprises the onboarding SUPI and/or the onboarding SUCI.

In an embodiment, in a case where an identifier of a network that the terminal needs to register is the identifier of the NPN, and an authentication algorithm for the terminal supports a privacy protection mechanism of the SUPI, the first identifier includes an anonymous identifier.

With respect to the apparatuses in the above embodiments, the specific manner in which each module performs an operation has been described in detail in the relevant method embodiments, and will not be described in detail herein.

Since the apparatus embodiments basically correspond to the method embodiments, relevant contents may refer to partial description of the method embodiments. The apparatus embodiments described above are merely schematic, in which the modules described as separate components may or may not be physically separated, and the components shown as modules may or may not be physical modules, i.e., they may be located at a single place or may be distributed to a plurality of network modules. Some or all of these modules may be selected according to actual needs to fulfill the purpose of the solution of the embodiments, which may be understood and implemented by those skilled in the art without creative labor.

The embodiments of the disclosure also provide a communication apparatus, which includes a processor and a memory for storing computer programs. When the computer programs are executed by the processor, the registration method performed by the terminal as described in any of the above embodiments is implemented.

The embodiments of the disclosure also provide a communication apparatus, which includes a processor and a memory for storing computer programs. When the computer programs are executed by the processor, the registration method performed by the TWAN described in any of the above embodiments is implemented.

The embodiments of the disclosure also provide a communication apparatus, which includes a processor and a memory for storing computer programs. When the computer programs are executed by the processor, the registration method performed by the AMF described in any of the above embodiments is implemented.

The embodiments of the disclosure also provide a computer-readable storage medium for storing computer programs. When the computer programs are executed by a processor, the registration method performed by the terminal as described in any of the above embodiments is implemented.

The embodiments of the disclosure also provide a computer-readable storage medium for storing computer programs. When the computer programs are executed by a processor, the registration method performed by the TWAN described in any of the above embodiments is implemented.

The embodiments of the disclosure also provide a computer-readable storage medium for storing computer programs. When the computer programs are executed by a processor, the registration method performed by the AMF described in any of the above embodiments is implemented.

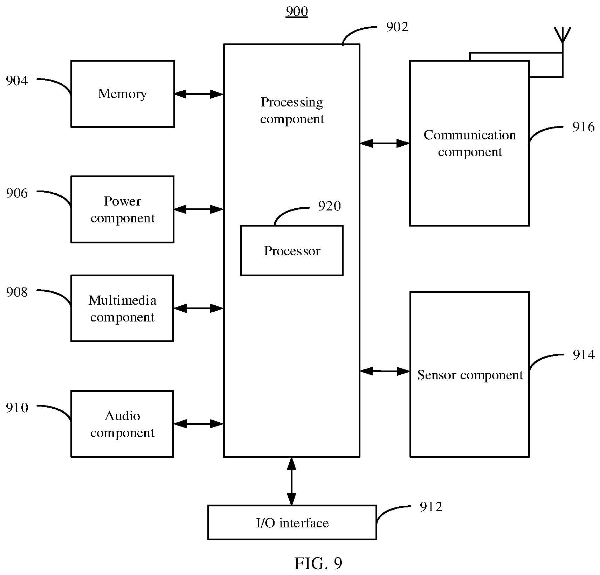

FIG. 9 is a block diagram of an apparatus 900 for registration according to an embodiment of the disclosure. For example, the apparatus 900 may be a mobile phone, a computer, a digital broadcasting terminal, a message transceiver device, a game console, a tablet device, a medical device, a fitness device and a personal digital assistant, etc.

As illustrated in FIG. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as the operations associated with display, telephone calls, data communications, camera operations, and recording operations. The processing component 902 may include one or more processors 920 to execute instructions to implement all or part of the steps of the registration method performed by the terminal according to any one of the above embodiments. Moreover, the processing component 902 may include one or more modules which facilitate interaction between the processing component 902 and other components. For example, the processing component 902 may include a multimedia module to facilitate interaction between the multimedia component 908 and the processing component 902.

The memory 904 is configured to store various types of data to support the operation of the apparatus 900. Examples of such data include instructions for any applications or methods operated on the apparatus 900, contact data, phonebook data, messages, pictures, videos, etc. The memory 904 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power in the apparatus 900.

The multimedia component 908 includes a screen providing an output interface between the apparatus 900 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 908 includes a front-facing camera and/or a rear-facing camera. When the apparatus 900 is in an operating mode, such as a shooting mode or a video mode, the front-facing camera and/or the rear-facing camera can receive external multimedia data. Each front-facing camera and rear-facing camera may be a fixed optical lens system or has a focal length and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 also includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the apparatus 900. For instance, the sensor component 914 may detect an open/closed status of the apparatus 900, relative positioning of components, e.g., the display and the keypad, of the apparatus 900, a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a Complementary Metal Oxide Semiconductor (CMOS) or Charge-Coupled Device (CCD) image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 can access a wireless network based on a communication standard, such as Wi-Fi, 2G or 3G, 4G LTE, 5G NR or a combination thereof. In an exemplary embodiment, the communication component 916 receives a broadcast signal from an external broadcast management system or broadcast associated information via a broadcast channel. In an exemplary embodiment, the communication component 916 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In an exemplary embodiment, the apparatus 900 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the registration method performed by the terminal according to any one of the above embodiments.

In an exemplary embodiment, there is also provided a non-transitory computer readable storage medium including instructions, such as the memory 904. The above instructions may be executed by the processor 920 in the apparatus 900, for performing the registration method performed by the terminal according to any one of the above embodiments. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, usages, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements not only comprise those elements, but also comprise other elements that are not explicitly listed or also comprise the inherent elements of the process, method, article or device. In the case that there are no more restrictions, an element qualified by the statement "comprises a... " does not exclude the presence of additional identical elements in the process, method, article or device that comprises the said element.

The above detailed description of the methods and devices provided by the embodiments of the disclosure is provided herein, and specific examples are used herein to illustrate the principles and implementations of the disclosure, and the above illustrations of the embodiments are only used to assist in understanding the methods of the disclosure and the core ideas thereof. Meanwhile, for those skilled in the art, based on the ideas of the disclosure, there will be changes in the specific implementations and the usage scope, and in summary, the contents of the specification should not be construed as a limitation on the disclosure.

## Claims

1. A registration method, performed by a terminal that does not support a 5G core network non-access stratum (5GC NAS) signaling over wireless local area network (WLAN) access, comprising:
sending a first identifier of the terminal, a registration type and an identifier of a non-public network (NPN) that the terminal needs to register to a trusted WLAN access network (TWAN).

2. The method of claim 1, wherein the registration type comprises at least one of:
stand-alone NPN (SNPN) onboarding;
initial registration; or
mobility registration update.

3. The method of claim 2, wherein the first identifier comprises at least one of:
a subscription permanent identifier (SUPI);
a subscription concealed identifier (SUCI);
an onboarding SUPI; or
an onboarding SUCI.

4. The method of claim 3, wherein in a case where the registration type is the SNPN onboarding, the first identifier comprises the onboarding SUPI and/or the onboarding SUCI.

5. The method of claim 2, wherein in a case where an identifier of a network that the terminal needs to register is the identifier of the NPN, and an authentication algorithm for the terminal supports a privacy protection mechanism of the SUPI, the first identifier comprises an anonymous identifier.

6. The method of any one of claims 1-5, wherein the terminal supports a key-generating extensible authentication protocol (EAP).

7. A registration method, performed by a trusted wireless local area network (WLAN) access network (TWAN), comprising:
receiving, from a terminal, a first identifier of the terminal, a registration type and an identifier of a non-public network (NPN) that the terminal needs to register, wherein the terminal is a terminal that does not support a 5G core network non-access stratum (5GC NAS) signaling over WLAN access; and
sending a registration request to an access and mobility management function (AMF), wherein the registration request comprises the first identifier and the registration type.

8. The method of claim 7, wherein the registration type comprises at least one of:
stand-alone NPN (SNPN) onboarding;
initial registration; or
mobility registration update.

9. The method of claim 8, wherein the first identifier comprises at least one of:
a subscription permanent identifier (SUPI);
a subscription concealed identifier (SUCI);
an onboarding SUPI; or
an onboarding SUCI.

10. The method of claim 9, wherein in a case where the registration type is the SNPN onboarding, the first identifier comprises the onboarding SUPI and/or the onboarding SUCI.

11. The method of claim 8, wherein in a case where an identifier of a network that the terminal needs to register is the identifier of the NPN, and an authentication algorithm for the terminal supports a privacy protection mechanism of the SUPI, the first identifier comprises an anonymous identifier.

12. A registration method, performed by an access and mobility management function (AMF), comprising:
receiving a registration request sent by a trusted wireless local area network (WLAN) access network (TWAN), wherein the registration request comprises a first identifier of a terminal, a registration type and an identifier of a non-public network (NPN) that the terminal needs to register, and the terminal is a terminal that does not support a 5G core network non-access stratum (5GC NAS) signaling over WLAN access.

13. The method of claim 12, wherein the registration type comprises at least one of:
stand-alone NPN (SNPN) onboarding;
initial registration; or
mobility registration update.

14. The method of claim 13, wherein the first identifier comprises at least one of:
a subscription permanent identifier (SUPI);
a subscription concealed identifier (SUCI);
an onboarding SUPI; or
an onboarding SUCI.

15. The method of claim 14, further comprising:
in a case where the registration type is the SNPN onboarding, determining that the terminal needs to perform onboarding registration.

16. The method of claim 15, further comprising:
in a case where the registration type is the SNPN onboarding, applying locally configured AMF configuration data for onboarding to restrict a network usage of the terminal to onboarding only; and
storing, in a context of the terminal, indication information for indicating that the terminal is registered for onboarding.

17. The method of claim 14, wherein in a case where the registration type is the SNPN onboarding, the first identifier comprises the onboarding SUPI and/or the onboarding SUCI.

18. The method of claim 13, wherein in a case where an identifier of a network that the terminal needs to register is the identifier of the NPN, and an authentication algorithm for the terminal supports a privacy protection mechanism of the SUPI, the first identifier comprises an anonymous identifier.

19. A registration system, comprising a terminal, a trusted wireless local area network (WLAN) access network (TWAN) and an access and mobility management function (AMF), wherein the terminal is configured to perform the registration method according to any one of claims 1-6, the TWAN is configured to perform the registration method according to any one of claims 7-11, and the AMF is configured to perform the registration method according to any one of claims 12-18.

20. A terminal, comprising:
a sending module, configured to send a first identifier of the terminal, a registration type and an identifier of a non-public network (NPN) that the terminal needs to register to a trusted wireless local area network (WLAN) access network (TWAN), wherein the terminal is a terminal that does not support a 5G core network non-access stratum (5GC NAS) signaling over WLAN access.

21. A trusted wireless local area network (WLAN) access network (TWAN), comprising:
a receiving module, configured to receive, from a terminal, a first identifier of the terminal, a registration type and an identifier of a non-public network (NPN) that the terminal needs to register, wherein the terminal is a terminal that does not support a 5G core network non-access stratum (5GC NAS) signaling over WLAN access; and
a sending module, configured to send a registration request to an access and mobility management function (AMF), wherein the registration request comprises the first identifier and the registration type.

22. An access and mobility management function (AMF), comprising:
a receiving module, configured to receive a registration request sent by a trusted wireless local area network (WLAN) access network (TWAN), wherein the registration request comprises a first identifier of a terminal, a registration type and an identifier of a non-public network (NPN) that the terminal needs to register, and the terminal is a terminal that does not support a 5G core network non-access stratum (5GC NAS) signaling over WLAN access.

23. A communication apparatus, comprising:
a processor;
a memory for storing computer programs;
wherein when the computer programs are executed by the processor, the registration method according to any one of claims 1-6 is implemented.

24. A communication apparatus, comprising:
a processor;
a memory for storing computer programs;
wherein when the computer programs are executed by the processor, the registration method according to any one of claims 7-14 is implemented.

25. A communication apparatus, comprising:
a processor;
a memory for storing computer programs;
wherein when the computer programs are executed by the processor, the registration method according to any one of claims 15-24 is implemented.

26. A computer-readable storage medium for storing computer programs, wherein when the computer programs are executed by a processor, the registration method according to any one of claims 1-6 is implemented.

27. A computer-readable storage medium for storing computer programs, wherein when the computer programs are executed by a processor, the registration method according to any one of claims 7-14 is implemented.

28. A computer-readable storage medium for storing computer programs, wherein when the computer programs are executed by a processor, the registration method according to any one of claims 15-24 is implemented.
